# EUROPÄISCHE PATENTANMELDUNG

(11) **EP 1 316 865 A1**
(43) Veröffentlichungstag der Anmeldung: **04.06.2003**
(21) Anmeldenummer: 01811151.8
(22) Anmeldetag: 28.11.2001
(51) Int. Cl.: G05B 19/418

(54) **Automatisierungsservicesystem**

(71) Anmelder: ABB RESEARCH LTD., 8050 Zürich (CH)
(72) Erfinder: Vetter, Claus, 5405 Baden-Dättwil (CH); Naedele, Martin, 8048 Zürich (CH); Preiss, Otto, 5079 Zeihen (CH)
(74) Vertreter: ABB Patent Attorneys

(57) **Zusammenfassung**

Die Erfindung ist gerichtet auf ein Automatisierungsservice-System, aufweisend zumindest eine erste Datenverarbeitungsanlage (6) mit zumindest einem darauf laufenden Service-Programmobjekt (7) zur Verarbeitung von Daten eines Automatisierungssystems (1) zur Prozesskontrolle von Anlagen, das über eine Software-Schnittstelle kontaktierbar ist und/oder zur Steuerung des Automatisierungssystems (1); und eine zweite Datenverarbeitungsanlage mit einem Kontroll-Programmobjekt (4) zur Kommunikation mit dem Automatisierungssystem (1) und mit dem Service-Programmobjekt (7) sowie zum Durchleiten von Informationen vom Automatisierungssystem (1) zum Service-Programmobjekt (7) und umgekehrt, wobei das Kontroll-Programmobjekt (4) über die Software-Schnittstelle mit dem Automatisierungssystem (1) kommuniziert. Die Erfindung ist ebenfalls auf ein Verfahren zur Verwendung mit einem solchen System gerichtet.

## Beschreibung

### Technisches Gebiet der Erfindung

Die vorliegende Erfindung ist gerichtet auf ein Automatisierungsservicesystem, bei dem auf extern bereitgestellte Serviceprogrammobjekte zur Verarbeitung von Daten eines Automatisierungssystems zugegriffen werden kann.

### Stand der Technik

Technische Anlagen, wie beispielsweise Anlagen zur Stromerzeugung und Verteilung, Gasverteilungsanlagen, Wasserverteilungsanlagen sowie Fertigungsanlagen zur Herstellung von industriell produzierten Gütern werden zumeist von Automatisierungssystemen gesteuert, welche in der Lage sind, die Prozeßkontrolle der in der Anlage ablaufenden Vorgänge vorzunehmen. Gewisse Dienstleistungen für den Anlagenbetrieb und das entsprechende Automatisierungssystem, wie beispielsweise Optimierungen, Zeitablaufsteuerung, das "Tuning" von Steuerungsgeräten, Ingenieursfachwissen und Datenimport, beziehungsweise Datenumwandlung, werden entweder nur in seltenen Fällen für den Betrieb der Anlage benötigt oder enthalten in ihren Algorithmen geistiges Eigentum, welches beispielsweise durch Dekompilierung des Codes aus entsprechenden Serviceprogrammen extrahierbar wäre. Sowohl die Seltenheit der Verwendung als auch die Gefahr einer möglichen Aufdeckung von hochspeziellem Wissen sind Gründe, warum Anwender eines industriellen Automatisierungssystems die Programme, welche die notwendigen Serviceoperationen durchführen, nicht kaufen wollen, beziehungsweise warum die Anbieter diese nicht verkaufen wollen, sondern nur der Betrieb, beziehungsweise die Dienstleistung (Service) selbst gehandelt werden soll beziehungsweise gehandelt wird.

Vorbekannte Management- und Bediensysteme für Automatisierungssysteme, wie beispielsweise Operate IT von ABB oder RSView32 von der Firma Rockwell bestehen beispielsweise aus einer Anzahl von mehr oder weniger integrierten Spezialanwendungen zur Prozeßkontrolle, Erfassung des zeitlichen Ablaufs der statistischen Prozeßkontrolle usw. Der Anwender kauft alle Komponenten des Systems, die er in seinem Datenverarbeitungssystem installiert und zur Steuerung seiner Anlage beziehungsweise seines Werks verwendet.

Andererseits wird Applikations-Dienstleistungsbereitstellung (Application Service Provision, ASP), das heißt die Bereitstellung eines Zugriffs von entfernten Anwendern durch das Internet auf Anwendungsprogramme, welche auf einem Rechner oder einem Rechnernetzwerk der serviceanbietenden Unternehmung laufen, beispielsweise im Bereich der Büroanwendungen durch Staroffice der Firma Sun oder ERP der Firma SAP angeboten. Die Firma ABB bietet durch spezialisierte WWW-Klientenprogramme zugängliche entfernte Dienstleistungen an, wobei ihr spezialisiertes Know-How beispielsweise zur Lastvorhersage verwendet wird (http://abb.prediction-partner.ch). Die existierenden Systeme erlauben jedoch keine enge Integration einer externen Serviceleistung mit der Funktionsweise eines Automatisierungssystems zur Anlagensteuerung. Es ist daher die Aufgabe der vorliegenden Erfindung, Ansätze bereitzustellen, mit denen die Betreiber von Automatisierungssystemen auf externe Dienstleistungen zugreifen kann.

### Darstellung der Erfindung

Diese Aufgabe wird erfindungsgemäß gelöst durch die Bereitstellung eines Automatisierungsservicesystems gemäß dem unabhängigen Patentanspruch 1 sowie eines Verfahrens zur Verwendung von externen Serviceleistungen gemäß dem unabhängigen Patentanspruch 9. Weitere vorteilhafte Ausgestaltungen, Aspekte und Details der Erfindung ergeben sich aus den abhängigen Ansprüchen, der Beschreibung sowie den beigefügten Zeichnungen.

Der Erfindung liegt das Prinzip zu Grunde, eine Art von programmtechnischem Adapter zwischen dem Automatisierungssystem und den externen Dienstleistungen bereitzustellen, der zwischen diesen einheitliche Schnittstellen zur Verfügung stellt und somit eine beliebige Austauschbarkeit und universelle Anwendbarkeit fördert.

Die Erfindung ist daher zunächst gerichtet auf ein Automatisierungsservicesystem aufweisend zumindest eine erste Datenverarbeitungsanlage mit zumindest einem darauf laufenden Serviceprogrammobjekt zur Verarbeitung von Daten eines Automatisierungssystems zur Prozeßkontrolle von Anlagen, das über eine Softwareschnittstelle kontaktierbar ist und/oder zur Steuerung des Automatisierungssystems und
eine zweite Datenverarbeitungsanlage mit einem Kontrollprogrammobjekt zur Kommunikation des Automatisierungssystems mit dem Serviceprogrammobjekt sowie zum Durchleiten von Informationen vom Automatisierungssystem zum Serviceprogrammobjekt und umgekehrt, wobei das Kontrollprogrammobjekt über die Softwareschnittstelle mit dem Automatisierungssystem kommuniziert.

Das Automatisierungssystem ist im Sinne der vorliegenden Erfindung eine Kombination von Hard- und Software, die der Prozeßkontrolle von Anlagen dient, wobei die Anlagen alle im Stand der Technik vorhandenen Verteilungs- und Fertigungsanlagen beziehungsweise -werke sein können. Die erste Datenverarbeitungsanlage ist erfindungsgemäß kein Bestandteil des Automatisierungssystems, sondern von diesem getrennt zu sehen und über spezielle Kommunikationskanäle beziehungsweise Netzwerke oder aber auch über allgemeine Netzwerke, die auch für andere Zwecke verwendet werden, beispielsweise Intranet, Extranet oder das Internet, verbunden. Die erste Datenverarbeitungsanlage steht mithin nicht beim Betreiber des Automatisierungssystems, sondern bei einem Serviceanbieter, beispielsweise dem Hersteller des Automatisierungssystems oder bei Drittanbietern.

Auf der zumindest einen ersten Datenverarbeitungsanlage läuft zumindest ein Serviceprogrammobjekt. Ein Serviceprogrammobjekt ist ein beliebiges Programmobjekt, das heißt ein Programm, ein Programmodul, ein Unterprogramm, ein Skript etc., das einen Service, also eine bestimmte Dienstleistung im Hinblick auf die Anlagensteuerung extern bereitstellen kann. Unter einem Programmobjekt ist hier ganz allgemein eine Software-Datenverarbeitungsentität zu verstehen, sei dies ein Objekt im Sinne des objektorientierten Programmieransatzes, eine Komponente im Sinne der Komponentenprogrammierung oder ein selbständiges Programm aus Sicht des Betriebssystems etc. Erfindungsgemäß soll das Serviceprogrammobjekt Daten des Automatisierungssystems in irgendeiner Art und Weise verarbeiten oder unmittelbar zur Steuerung des Automatisierungssystems dienen können. Serviceprogrammobjekte können der statistischen Auswertung von Vorgängen im Automatisierungssystem diesen, der zeitlichen Erfassung von Vorgängen und der Ableitung von Schlussfolgerungen aus diesen Erkenntnissen, sie können eine graphische Aufbereitung von Daten oder Zusammenhängen vornehmen, die ein Bediener oder Beobachter des Automatisierungssystem besser erfassen kann, sie können aber auch eine erweiterte Steuerung des Automatisierungssystems bewirken, beispielsweise können sie eine Funktion für Rekonfigurierungen implementieren oder Lastverteilungen (bei mehrgliedrigen Anlagen) vornehmen.

Die zweite Datenverarbeitungsanlage dient erfindungsgemäß als der zuvor skizzierte Adapter zwischen dem Automatisierungssystem und dem Serviceprogrammobjekt. Auf der zweiten Datenverarbeitungsanlage befindet sich ein Kontrollprogrammobjekt, welches die Kommunikation des Automatisierungssystems mit dem Serviceprogrammobjekt übernimmt. Es verwendet die vom Automatisierungssystem zur Verfügung gestellte Softwareschnittstelle. Es kann weiter unten skizzierte eigene Funktionalitäten implementieren und/oder dem einfachen Durchleiten von Informationen dienen, wobei gegebenenfalls eine weiter unten beschriebene Konvertierung von Daten vom Kontrollprogrammobjekt durchgeführt werden kann.

Die zweite Datenverarbeitungsanlage und damit das darauf laufende Kontrollprogrammobjekt kann dabei entweder integraler Bestandteil des Datenverarbeitungssystems des Automatisierungssystems zur Prozeßkontrolle sein oder kann mit dem Automatisierungssystem über einen Kanal verbunden sein. Im ersten Fall kann beispielsweise das Kontrollobjekt auch auf der standardmäßig verwendeten Datenverarbeitungsanlage zur Prozeßkontrolle ablaufen und somit ein in der Tat weitgehend integrierter Bestandteil des Automatisierungssystems sein, das aber darüber hinaus einen Zugang auf externe Funktionalitäten ermöglicht. Im anderen Fall kann das Kontrollobjekt sich auf einer eigenen Datenverarbeitungsanlage, beispielsweise einer Workstation, befinden, die sowohl mit dem Automatisierungssystem als auch mit einer oder mehreren ersten Datenverarbeitungsanlagen verbunden sein kann. Die Kommunikation erfolgt in diesem Fall allgemein über einen Kanal. Dies kann sowohl eine spezialisierte Datenleitung sein als auch ein allgemeines Netzwerk entweder des Automatisierungssystems oder einer sonstigen Datenverarbeitungseinrichtung, in die die zweite Datenverarbeitungsanlage integriert ist. Durch die verschiedenen Möglichkeiten bei der Ausgestaltung der Lokalisierung des Kontrollobjekts und der zweiten Datenverarbeitungsanlage kann den verschiedenen Ausbaustadien und Entwicklungszuständen für ein Automatisierungssystem Rechnung getragen werden. So ist es beim Vorhandensein einer entsprechenden Infrastruktur ohne weiteres möglich, ein Kontrollprogrammobjekt, also ein ergänzendes Programm, nach dessen Anfertigung auf Rechnern des Automatisierungssystems zu installieren, sollte das Automatisierungssystem entsprechende Eingriffe ermöglichen.

Es ist andererseits ebenso möglich, beim Integrieren des erfindungsgemäßen Systems einen kompletten Rechner einfach mit dem existierenden und unveränderten Automatisierungssystem zu koppeln, sofern dieses lediglich über eine Schnittstelle verfügt, über die es Daten ausgeben kann. In diesem Zusammenhang muß darauf hingewiesen werden, daß das Automatisierungssystem eine grundsätzliche Befähigung für eine externe Kommunikation aufweisen muß. Dies ist jedoch bei im Stand der Technik bekannten Automatisierungssystemen durchweg gegeben, beziehungsweise in einfacher Weise implementierbar.

Erfindungsgemäß soll dies durch die Aufnahme einer Softwareschnittstelle in das Konzept des erfindungsgemäßen Automatisierungsservicesystems verdeutlicht werden.

Die Interaktion von Automatisierungssystemen und der Service-Programmobjekte kann in einer bevorzugten Ausführungsform der vorliegenden Erfindung automatisiert werden, indem ein Steuerprogrammobjekt in das Automatisierungsservicesystem integriert wird, das der automatischen Steuerung sowohl des Kontrollprogrammobjekts als auch des zumindest einen Serviceprogrammobjekts dient. Auf diese Weise ist es möglich, beispielsweise das Anfordern von notwendigen Daten des Automatisierungssystems, welches durch das Kontrollprogrammobjekt geschieht, oder das Aufrufen eines speziellen Serviceprogrammobjekts zur Abarbeitung solcher Daten ohne menschliche Eingriffe durchzuführen. Es ist beispielsweise möglich, eine Skriptsprache zur Steuerung des Kontrollobjekts und gegebenenfalls der Serviceobjekte zu entwickeln und das Steuerprogrammobjekt als ein Skript oder eine Sammlung von Skripten auszulegen, welche auf das Kontrollprogrammobjekt zugreifen und es steuern können. In diesem Fall erfolgt die Steuerung des Serviceprogrammobjekts indirekt durch Anweisung an das Kontrollprogrammobjekt, welches entsprechende Steuersequenzen an das Serviceprogrammobjekt weitergeben kann.

Alternativ oder zusätzlich zu einer solchen automatischen Steuerung ist es ebenfalls möglich und wird in einer bevorzugten Ausführungsform implementiert, daß die erste Datenverarbeitungsanlage aufweist ein generisches Darstellungsprogramm für in einem Standardformat verfaßte Daten, dessen Funktionalität durch Programmobjekte erweiterbar ist, wobei das Kontrollprogrammobjekt ein die Funktionalität des Darstellungsprogramms erweiterndes Anzeigeprogrammobjekt zur Steuerung des Kontrollprogrammobjekts und/oder zur Anzeige von Daten vom Automatisierungssystem und/oder dem Serviceprogrammobjekt aufweist.

Durch diese bevorzugte Ausführungsform der Erfindung wird es einem Bediener, beispielsweise dem Bedienpersonal des Automatisierungssystems, möglich, unmittelbar in die Verwendung des erfindungsgemäßen Automatisierungsservicesystems einzugreifen. Unter einem generischen Darstellungsprogramm ist im Sinne der Erfindung ein Programm zu verstehen, welches nicht speziell zur Implementierung der Erfindung geschrieben worden ist (obwohl auch die Verwendung eines solchen möglich und erfindungsgemäß mit erfaßt ist), sondern ein Programm, welches ohnedies beispielsweise zur Steuerung des Automatisierungssystems bereits vorhanden ist, oder das ein Darstellungsprogramm von Informationen auf einem speziellen Steuerungsrechner, beispielsweise einem Personal Computer, ist. Ein solches generisches Darstellungsprogramm kann beispielsweise ein HTML-, XML- oder SOAP-Browser sein.

Zur Verwendung mit dem erfindungsgemäßen System ist es notwendig, die Funktionalität des verwendeten Darstellungsprogramms entsprechend zu erweitern. Dies geschieht mittels eines Anzeigeprogammobjekts, welches als ein, im allgemeinen als Plug-In bezeichnetes, Programmodul dem generischen Darstellungsprogramm hinzugefügt wird. Bei Verwendung von Browsern für Seitenbeschreibungssprachen kann dies beispielsweise ein in Java-Script, Java oder ActiveX abgefaßtes Programm beziehungsweise Skript sein, welches vom Browser programmartig ausgeführt wird.

Das Anzeigeprogrammobjekt bietet eine Schnittstelle zum Anwender, die sowohl Daten des Automatisierungssystems als auch des Kontrollprogrammobjekts, beziehungsweise des Serviceprogrammobjekts, präsentieren kann und eine Eingabe von Anweisungen an Kontrollprogrammobjekt und/oder Serviceprogrammobjekt ermöglicht. Die Eingabe von Befehlen kann hierbei über eine graphische Benutzerschnittstelle und das Anklicken von angezeigten Befehlsoptionen geschehen oder über eine Kommandozeileneingabe, welche entsprechende Befehlssequenzen durch Eingaben beispielsweise über eine Tastatur oder eine Sprachsteuerung, entgegennimmt. Die entsprechend eingegebenen Befehle werden vom Anzeigeprogrammobjekt dann weitergeleitet.

Um auch bei verschiedenen Typen von Serviceprogrammobjekten eine korrekte Anzeige der in ihnen zur Verfügung stehenden Funktionen durch das Anzeigeprogrammobjekt zu gewährleisten, kann es weiterhin bevorzugt werden, daß das Anzeigeprogrammobjekt ein Funktionsbestimmungsprogrammobjekt aufweist, das der Bestimmung und Präsentation von Funktionen des Serviceprogrammobjekts dient. Für die praktische Implementation dieser Funktionalität stehen verschiedene Möglichkeiten zur Verfügung. So kann beispielsweise zu einem Systemstart des Kontrollprogrammobjekts oder des Anzeigeprogrammobjekts eine Routine durchlaufen werden, welche sämtliche in einem bestimmten Netzwerk oder sonstwie zugänglichen Serviceprogrammobjekte auffindet (beispielsweise durch einen Broadcast-Aufruf) und sodann die einzelnen Serviceprogrammobjekte mittels einer standardisierten Befehlssequenz zur Übermittlung der verschiedenen in ihnen implementierten möglichen Funktionen auffordert. Nach Übersendung entsprechender Angaben durch die Serviceprogrammobjekte werden diese gesammelt und auf dem Bildschirm dargestellt. Eine weitere Variante kann darin bestehen, daß zunächst nur die Namen, beziehungsweise Funktionsbereiche, der einzelnen Serviceprogrammobjekte identifiziert und angezeigt werden. Beim Aufruf einer bestimmten Servicefunktionsgruppe wird dann das zugehörige Serviceprogrammobjekt erneut abgefragt und die in ihm implementierten Funktionen detailliert angezeigt, so daß der Benutzer sie entsprechend auswählen kann.

Noch eine Möglichkeit liegt im Abfragen eines zentralen Verzeichnisdienstes, der eine Liste bzw. Datenbank der verfügbaren Serviceprogrammobjekte und ihrer Lokalisierung enthält. Ein solcher Verzeichnisdienst wird derzeit beispielsweise von UDDI zur Verfügung gestellt (http://www.uddi.org).

Eine weitere Möglichkeit besteht darin, daß das Funktionsbestimmungsprogrammobjekt eine Liste oder einen hierarchischen Aufbau o.ä. vorgegebener Funktionen gespeichert hat und nach Anwahl, beziehungsweise Eingabe einer entsprechenden Funktion, erst das Funktionsbestimmungsprogrammobjekt nach geeigneten Serviceprogrammobjekten sucht, um ihnen die gewünschte Funktion als Systemaufruf mit den notwendigen Daten zu übermitteln. Die letzte Variante erfordert jedoch bei Erweiterungen des Gesamtsystems eine Erweiterung der entsprechenden Einträge des Funktionsbestimmungsprogrammobjekts und erlaubt damit praktisch kein automatisiertes Auffinden aller zur Verfügung stehenden Funktionen beziehungsweise Dienstleistungen.

In vielen Fällen wird das Automatisierungssystem mit anderen Datenformaten und Befehlssequenzen arbeiten als die ebenfalls beteiligten Serviceprogrammobjekte oder das Kontrollprogrammobjekt. In solchen Fällen kann es notwendig sein, eine Formatkonvertierung vorzunehmen. Daher weist das Kontrollprogrammobjekt vorzugsweise zumindest ein Umwandlungsprogrammobjekt zur Umwandlung von Daten des Automatisierungssystems in Daten in einem Standardformat zur Verwendung durch das Serviceprogrammobjekt, das Kontrollprogrammobjekt und/oder zur Präsentation durch das Anzeigeprogrammobjekt und/oder zur Umwandlung von Daten im Standardformat des Serviceprogrammobjekts in Daten zur Verwendung durch das Automatisierungssystem und/oder zur Präsentation durch das Anzeigeprogrammobjekt auf. Hier wird davon ausgegangen, daß die Daten den Serviceprogrammobjekten in einem standardisierten Format zugeführt werden müssen. Auch das Anzeigeprogrammobjekt erhält die Daten in einem Standardformat, beispielsweise bei Verwendung eines üblichen Seitenbeschreibungssprachenbrowsers als Darstellungsprogramm als XML-, HTML- oder SOAP-Daten. Die Serviceprogrammobjekte können dasselbe Format verwenden wie das Anzeigeprogrammobjekt oder auch ein anderes Standardformat. Unter einem Standardformat ist in diesem Sinne zu verstehen ein gemeinsames Format der verschiedenen Serviceprogrammobjekte. Auch ist es vorstellbar, daß einzelne Serviceprogrammobjekte unterschiedliche Formate verwenden und daher das Umwandlungsprogrammobjekt oder eine Mehrzahl von Umwandlungsprogrammobjekten die im Kontrollprogrammobjekt implementiert sind, verschiedene Formate und deren Konversion beherrschen müssen.

Es ist weiterhin möglich, daß das Umwandlungsprogrammobjekt nicht Teil des Kontrollprogrammobjekts ist, sondern im Automatisierungssystem implementiert ist, so daß über die Softwareschnittstelle dieses Automatisierungssystems bereits Daten im Standardformat weitergeleitet werden. Auch ist es schließlich möglich, das Serviceprogrammobjekte und Automatisierungssystem identische Datenformate verwenden und das Darstellungsprogramm ebenfalls speziell hierfür eingerichtet ist.

Auch bei Verwendung eines üblichen Seitenbeschreibungssprachenbrowsers kann durch Bereitstellung eines geeigneten Plug-In Moduls als Anzeigeprogrammobjekt die Darstellung von Daten im selben Format erzwungen werden. Der Ausführung sind hier keine Grenzen gesetzt und der Fachmann kann sich weitere Möglichkeiten zur Implementierung vorstellen, die eine Kommunikation der verschiedenen Objekte des erfindungsgemäßen Automatisierungsservicesystems miteinander ermöglichen.

Das Automatisierungsservicesystem gemäß der Erfindung kann weiterhin einen eigenen Verzeichnisdienst zum Auffinden geeigneter Servicedienstleistungen in einem Netzwerk mit einer Mehrzahl zweiter Datenverarbeitungsanlagen aufweisen. Durch diese Möglichkeiten, die im Zusammenhang mit dem Funktionsbestimmungsprogrammobjekt bestehen können, ist es möglich, ohne vorherige Kenntnis der in einem Netzwerk vorhandenen Serviceprogrammobjekte, welche über eine Vielzahl von verschiedenen weit entfernten Rechnern verteilt sein kann, das gesamte Spektrum der zur Verfügung stehenden externen Dienstleistungen zu bestimmen und je nach Auslegung des Automatisierungssystems, beziehungsweise des Kontrollprogrammobjekts, auch auszunutzen. Ein solcher Verzeichnisdienst entspricht technisch weitgehend dem oben beschriebenen allgemeinen Verzeichnisdienst UDDI.

Die Erfindung umfasst neben dem Automatisierungsservicesystem weiterhin ein Verfahren, welches die zur Verwendung eines externen Serviceprogrammobjekts notwendigen Aktionen durchführt. Alles bezüglich des Automatisierungsservicesystems gesagte gilt gleichermaßen für das erfindungsgemäße Verfahren und umgekehrt, so daß auf dieses wechselseitig Bezug genommen und verwiesen wird.

Die Erfindung ist daher weiterhin gerichtet auf ein Verfahren zur Verwendung von externen Serviceleistungen für ein Automatisierungssystem durch ein Kontrollprogrammobjekt, das die Kommunikation zwischen zumindest einem Serviceprogrammobjekt zur Verarbeitung von Daten des Automatisierungssystems und/oder zur Steuerung des Automatisierungssystems und dem Automatisierungssystem durchführt und welches folgende Schritte aufweist:
- Anfordern von benötigten Eingabedaten vom Automatisierungssystem durch das Kontrollprogrammobjekt über eine Softwareschnittstelle des Automatisierungssystems;
- Weiterleiten der Eingabedaten vom Automatisierungssystem an ein geeignetes Serviceprogrammobjekt durch das Kontrollprogrammobjekt;
- Verarbeiten der Eingabedaten durch das Serviceprogrammobjekt;
- Zurücksenden von aus den Eingaben erzeugten Ausgabedaten an das Kontrollprogrammobjekt; und
- Weiterverwenden der Ausgabedaten.

Hierbei ist unter einem geeigneten Serviceprogrammobjekt ein solches zu verstehen, welches in der Lage ist, eine durchzuführende Dienstleistung für das Automatisierungssystem zu erbringen. Diese kann entweder von einem Anwender ausgewählt sein oder auf Grund eines automatisch ablaufenden Programms bestimmt werden. Das Weiterleiten der Eingabedaten vom Automatisierungssystem wird gegebenenfalls unter Umwandlung des Datenformats der Eingabedaten vorgenommen.

Der allgemein als Weiterverwenden der Ausgabedaten bezeichnete abschließende Verfahrensschritt kann als Anzeigen der Ausgabedaten durch ein Anzeigeprogrammobjekt stattfinden. In diesem Fall werden keine Daten an das Automatisierungssystem zurückgesendet. Eine solche Funktion kann beispielsweise bei Auswertmaßnahmen, wie zum Beispiel der Erfassung des zeitlichen Verlaufs von Vorgängen im Automatisierungssystem oder der statistischen Auswertung von Aktionen, die im Automatisierungssystem stattgefunden haben, nützlich sein.

Das Weiterverwenden der Ausgabedaten kann auch ein Weitersenden dieser Daten an das Automatisierungssystem und ein entsprechendes Verwenden durch das Automatisierungssystem beinhalten.

Das erfindungsgemäße Verfahren kann vor dem Anfordern die folgenden weiteren Schritte aufweisen:
- Erkennen einer vom Anwender gewählten Funktion eines in einem Darstellungsprogramm ablaufenden Anzeigeprogrammobjekt des Kontrollprogrammobjekts; und
- Bestimmen eines zur Ausführung der gewählten Funktion geeigneten Serviceprogrammobjekts.

Wie bereits oben erläutert, stehen verschiedene Möglichkeiten für die konkrete Ausgestaltung dieser Schritte zur Verfügung, welche im übrigen dem Fachmann auf dem Gebiet der Programmiertechnik auch geläufig sind. Es handelt sich im wesentlichen um übliche Maßnahmen zum Aufrufen von Programmfunktionen, wobei hier je nach konkreter Ausgestaltung noch ein Durchsuchen eines Netzwerks, in dem sich verschiedene Datenverarbeitungsanlagen mit darauf ablaufenden Serviceprogrammobjekten befinden, hinzukommen kann.

Wie bereits oben erläutert, kann die Koordination zwischen dem Automatisierungssystem und einem oder mehreren Serviceprogrammobjekten auch automatisiert erfolgen. Hierzu kann das Verfahren vor dem Anfordern folgende Schritte aufweisen:
- Aufrufen einer bestimmten Funktion durch ein selbständig ablaufendes Programmobjekt und
- Bestimmen eines zur Ausführung der gewählten Funktion geeigneten Serviceprogrammobjekts.

Sofern nicht klar ist, welche Eingabedaten von einem Serviceprogrammobjekt zur Abarbeitung einer bestimmten Funktion notwendig sind, kann das Verfahren vor dem Anfordern vorzugsweise folgende Schritte aufweisen:
- Bestimmen der benötigten Eingabedaten durch Stellen einer Anfrage an das Serviceprogrammobjekt und
- Übersenden einer Information über benötigte Eingabedaten vom Serviceprogrammobjekt an das Kontrollprogrammobjekt.

Auf diese Weise kann zunächst festgestellt werden, welche Daten benötigt werden, um die Ausführung des Serviceprogrammobjekts zu ermöglichen.

### Kurze Beschreibung der Zeichnungen

Im folgenden soll die Erfindung an Hand von konkretisierten Ausführungsbeispielen näher erläutert werden, wobei auf die beigefügten Zeichnungen Bezug genommen wird, in denen folgendes dargestellt wird:
Figur 1 zeigt eine einfache Ausführungsform eines erfindungsgemäßen Automatisierungsservicesystems mit seinen grundlegenden Komponenten; und
Figur 2 zeigt eine weiter konkretisierte Ausführungsform des erfindungsgemäßen Automatisierungssystems unter Berücksichtigung einer Realisierung mittels des Internets.

### Wege zur Ausführung der Erfindung

Die vorliegende Erfindung schlägt eine Architektur für verteilte Prozeßautomatisierungssysteme vor, beispielsweise eine www-basierte Anzeigen- und Steuerungsarchitektur.

Die Erfindung ist auf eine spezifische Hard- und Softwarearchitektur gerichtet, die ein Management- und Bediensystem für Automatisierungssysteme, wie beispielsweise Operate IT, mit externen Anwendungsdienstleistungen (auch als Webservices bekannt) integriert. Das sogenannte Human Management Interface (HMI) integriert hierbei vorzugsweise einen oder mehrere Dienstleistungsklienten, wie beispielsweise eine Active X Steuerung oder einen WWW-Browser mit einer lokal vorgehaltenen Seite in einer Seitenbeschreibungssprache plus einem spezifischen lokal vorgehaltenen Code, wie beispielsweise Active Server Pages, welche eine Benutzerschnittstelle für den Service und gegebenenfalls einen lokalen Datenproxy bereitstellen.

Der lokale Klient kennt hierbei entweder die Adresse, wie beispielsweise die URL (Universal Resource Locator) der entfernten Serviceobjekte, oder verwendet einen Verzeichnisdienst, um ihn zu finden. Ein solcher Verzeichnisdienst kann beispielsweise UDDI (www.uddi.org) sein. Der lokale Klient (Kontrollprogrammobjekt) kontaktiert durch ein Netzwerk die entfernten Computer, welche die Serviceprogrammobjekte ausführen. Serviceaufruf und Rückgabe von Ausgabewerten erfolgen hierbei über Standardformate, beziehungsweise Protokolle, wie beispielsweise XML oder SOAP, um dadurch vorzugsweise auf möglichst viele Standardkomponenten zurückgreifen zu können und den Programmieraufwand für das System klein zu halten.

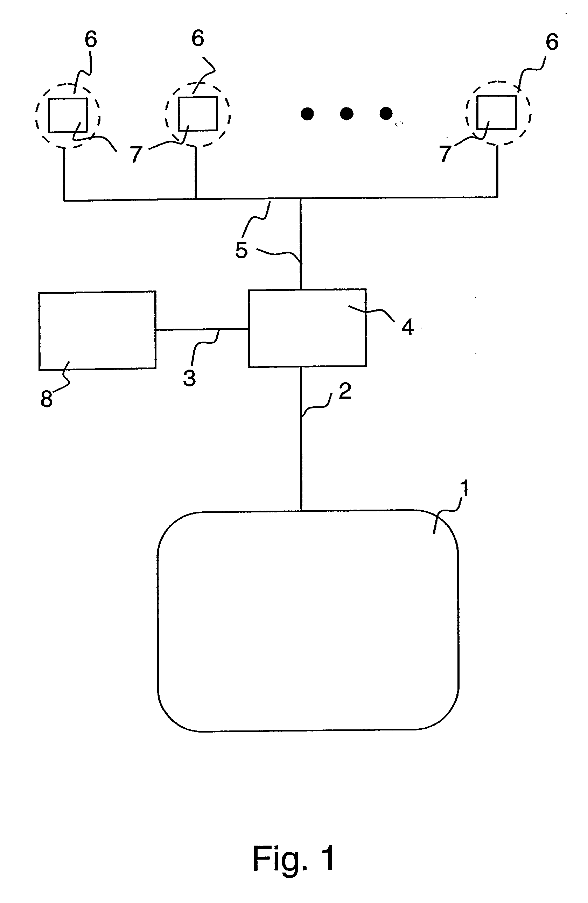

Figur 1 zeigt ein einfach aufgebautes Beispiel eines erfindungsgemäßen Automatisierungsservicesystems. Ein Automatisierungssystem 1 ist hierbei über einen Kanal oder ein Netzwerk 2 mit einer Datenverarbeitungsanlage verbunden, auf der ein Kontrollprogrammobjekt 4 residiert. Ein Datenaustausch kann hierbei über eine Softwareschnittstelle zwischen dem Kontrollprogrammobjekt 4 und entsprechenden Datenverarbeitungseinrichtungen im Automatisierungssystem 1 erfolgen.

Die Datenverarbeitungsanlage mit dem Kontrollprogrammobjekt 4 ist über ein Netzwerk 5 oder ähnliches mit weiteren Datenverarbeitungsanlagen 6 verbunden, auf denen Serviceprogrammobjekte 7 ablauffähig sind. Das Kontrollobjekt 4 übernimmt hierbei den Datenaustausch zwischen dem Automatisierungssystem und den Serviceprogrammobjekten 7 und bewirkt gegebenenfalls eine Datenkonvertierung und eine Ablaufsteuerung. Zusätzlich kann ein Anzeigeprogrammobjekt 8 vorgesehen sein, das über eine Verbindung 3 mit dem Kontrollprogrammobjekt 4 verbunden ist und dem Anzeigen von Informationen des Automatisierungssystems, des Kontrollprogrammobjekts 4 und/oder des Serviceprogrammobjekts 7 dient und eine Steuerung durch einen Bediener ermöglicht.

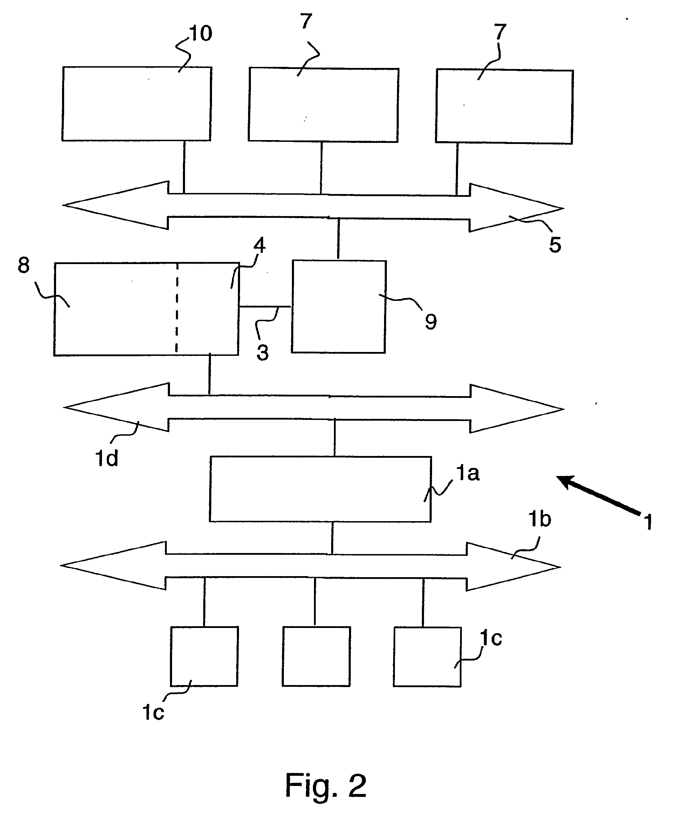

Figur 2 zeigt eine detailliertere Ansicht einer möglichen Implementierung der Erfindung mit derzeit üblicherweise einsetzbaren Komponenten. Das Automatisierungssystem 1 besteht hierbei aus dem eigentlichen Automatisierungsdatenverarbeitungssystem 1a, einem Steuerungsnetzwerk 1b sowie Controllern lc, welche die verschiedenen zu steuernden Geräte steuern.

Die verschiedenen Komponenten können Teil eines Fabrik- oder Anlagennetzwerks sein. Das Kontrollprogrammobjekt 4 kann über ein weiteres Controller-Netzwerk 1d Verschiedene Serviceprogrammobjekte, sogenannte Serviceprovider wie beispielsweise Webservices 7 sind über ein Netzwerk 5, beispielsweise das Internet, miteinander verbunden. Der Datenaustausch wird zusätzlich über lokale Serviceproxys 9 erreicht.

Ebenfalls in das System integriert sein können Verzeichnisdienste 10. Im folgenden soll ein möglicher Ablauf einer externen Sevicebereitstellung skizziert werden.
1. Von einem Funktionsmenü im Anzeigeprogrammobjekt 8 des HMI wählt der Bediener eine Funktion aus, die an einen entfernten Anwendungsservice gebunden ist, wie beispielsweise einen WWW-Service. Der aufgerufene Menüpunkt ruft wiederum den lokalen Proxy 9 für diesen entfernten Applikationsservice auf;
2. der lokale Proxy 1 verbindet sich mit dem Automatisierungssystem; und
3. liest vom Automatisierungssystem durch seine API (Application Programming Interface = Softwareschnittstelle) alle benötigten Eingabedaten für die entfernte Anwendung. Dieser Schritt kann optional sein falls die entfernte Anwendung keine Eingabedaten benötigt.
4. Der lokale Proxy kontaktiert einen Verzeichnisdienst, um die Adresse des entfernten Service aufzufinden, wobei er gegebenenfalls verschiedene zusätzliche Suchparameter verwendet (dieser Schritt ist ebenfalls optional, falls die Adresse dem System bereits bekannt ist).
5. Der Verzeichnisdienst gibt die angeforderte Information an den lokalen Proxy 9 zurück.
6. Der lokale Proxy ruft die entfernte Anwendung (also den WWW-Service) auf, um die durchgereichten Daten zu verarbeiten.
7. Ausgabedaten als Verarbeitungsresultate werden an den lokalen Proxy zurückgegeben.
8. Der lokale Proxy 9 übergibt die Resultate an das Automatisierungssystem 1.
9. Vom Automatisierungssystem werden die Daten an das HMI zurückgegeben.

Der Vorteil der hier vorgestellten erfindungsgemäßen Lösung gegenüber konventionell vorbekannten unmittelbaren WWW-Servicezugriffen über einen Webbrowser ist die enge Datenintegration zwischen dem Automatisierungssystem und dem Serviceprogrammobjekt, welches durch einen Anzeigeklienten und die Softwareschnittstelle des Automatisierungssystems direkt Daten vom Automatisierungssystem lesen oder darauf schreiben kann oder die Datenstruktur eines Automatisierungssystems modifizieren kann.

Die Vorteile gegenüber bekannten monolithischen Systemen liegt in den folgenden Vorteilen:
a) Der Benutzer kann von einer großen Vielfalt von Dienstleistungen wählen und somit seine bevorzugte Auswahl selbst zusammenstellen.
b) Der Benutzer wird stets in der Lage sein, die neuesten Versionen einer Dienstleistung zu verwenden, ohne diese Dienstleistung installieren zu müssen. Dies wird auch zu verringerten Softwarewartungskosten beim Benutzer führen.
c) Der Benutzer kann Dienstleistungen nach Bedarf abrufen anstelle einer Alles-oder-Nichts Lösung. Neben den Geschäftsvorteilen eines solchen Modells können auch die Hardwareanforderungen beim Benutzer dramatisch reduziert werden, da nicht alle Dienstleistungen zur gleichen Zeit installiert beziehungsweise benutzt werden müssen.
d) Der Aufwand auf Bereitstellerseite der Dienstleistung ist ebenfalls dramatisch reduziert. Um die Kunden eines Dienstleisters mit aktuellen Versionen von Dienstleistungen zu versorgen, müssen diese lediglich einmal zentral beim Dienstleister installiert und konfiguriert werden. Die Bereitstellung, beziehungsweise Verteilung der Dienstleistung wird dann automatisch durchgeführt, wenn der Benutzer den Dienst abruft.
e) Der Dienstleistungsanbieter kann Algorithmen durch Dienstleistungen bereitstellen, ohne das eigentliche Programm weiterzugeben und damit einer möglichen Dekompilierung auszusetzen.

### Bezugszeichenliste

- 1: Automatisierungssystem
- 1a: Automatisierungsdatenverarbeitungssystem
- 1b: Steuerungsnetzwerk
- lc: Controller
- 1d: Controller-Netzwerk
- 2: Netzwerk
- 3: Verbindung Kontroll-/Anzeigeprogrammobjekt
- 4: Kontrollprogrammobjekt
- 5: Netzwerk
- 6: erste Datenverarbeitungsanlage
- 7: Serviceprogrammobjekt (Webservice)
- 8: Anzeigeprogrammobjekt
- 9: Lokaler Proxy
- 10: Verzeichnisdienst

## Patentansprüche

1. Automatisierungsservice-System, aufweisend
zumindest eine erste Datenverarbeitungsanlage (6) mit zumindest einem darauf laufenden Service-Programmobjekt (7) zur Verarbeitung von Daten eines Automatisierungssystems (1) zur Prozesskontrolle von Anlagen, das über eine Software-Schnittstelle kontaktierbar ist und/oder zur Steuerung des Automatisierungssystems (1); und
eine zweite Datenverarbeitungsanlage mit einem Kontroll-Programmobjekt (4) zur Kommunikation mit dem Automatisierungssystem (1) und mit dem Service-Programmobjekt (7) sowie zum Durchleiten von Informationen vom Automatisierungssystem (1) zum Service-Programmobjekt (7) und umgekehrt, wobei das Kontroll-Programmobjekt (4) über die Software-Schnittstelle mit dem Automatisierungssystem (1) kommuniziert.

2. Automatisierungsservice-System nach Anspruch 1, **dadurch gekennzeichnet, daß** die zweite Datenverarbeitungsanlage ein Bestandteil eines Datenverarbeitungssystems des Automatisierungssystems (1) zur Prozesskontrolle ist.

3. Automatisierungsservice-System nach Anspruch 1, **dadurch gekennzeichnet, daß** die zweite Datenverarbeitungsanlage mit dem Automatisierungssystem (1) über einen Kanal (2) verbunden ist.

4. Automatisierungsservice-System nach einem der Ansprüche 1 bis 3, **dadurch gekennzeichnet, daß** es weiterhin aufweist zumindest ein Steuerprogramm-Objekt zur automatischen Steuerung des Kontroll-Programmobjekts (4) und des zumindest einen Service-Programmobjekts (7).

5. Automatisierungsservice-System nach einem der Ansprüche 1 bis 4, **dadurch gekennzeichnet, daß** die zweite Datenverarbeitungsanlage (6) aufweist ein generisches Darstellungsprogramm für in einem Standardformat verfasste Daten, dessen Funktionalität durch Programmobjekte erweiterbar ist, wobei das Kontroll-Programmobjekt (4) ein die Funktionalität des Darstellungsprogramms erweiterndes Anzeige-Programmobjekt (8) zur Steuerung des Kontroll-Programmobjekts (4) und/oder zur Anzeige von Daten vom Automatisierungssystem (1) und/oder dem Service-Programmobjekt (7) aufweist.

6. Automatisierungsservice-System nach Anspruch 5, **dadurch gekennzeichnet, daß** das Anzeige-Programmobjekt (8) ein Funktionsbestimmungs-Programmobjekt aufweist, daß der Bestimmung und Präsentation von Funktionen des Service-Programmobjekts (7) dient.

7. Automatisierungsservice-System nach einem der Ansprüche 1 bis 6, **dadurch gekennzeichnet, daß** das Kontroll-Programmobjekt (4) zumindest ein Umwandlungs-Programmobjekt zur Umwandlung von Daten des Automatisierungssystems (1) in Daten in einem Standardformat zur Verwendung durch das Service-Programmobjekt (7), das Kontroll-Programmobjekt (4) und/oder zur Präsentation durch das Anzeige-Programmobjekt (8) und/oder zur Umwandlung von Daten im Standardformat des Service-Programmobjekts (7) in Daten zur Verwendung durch das Automatisierungssystem (1) und/oder zur Präsentation durch das Anzeige-Programmobjekt (8) aufweist.

8. Automatisierungsservice-System nach einem der Ansprüche 1 bis 7, **dadurch gekennzeichnet, daß** es weiterhin aufweist einen Verzeichnis-Dienst (10) zum Auffinden geeigneter Service-Dienstleistungen in einem Netzwerk mit einer Mehrzahl erster Datenverarbeitungsanlagen (6).

9. Verfahren zur Verwendung von externen Service-Leistungen für ein Automatisierungssystem (1) durch ein Kontroll-Programmobjekt (4), das die Kommunikation zwischen zumindest einem Service-Programmobjekt (7) zur Verarbeitung von Daten des Automatisierungssystems (1) und/oder zur Steuerung des Automatisierungssystems (1) und dem Automatisierungssystem (1) durchführt,
aufweisend die folgenden Schritte:
- Anfordern von benötigten Eingabedaten vom Automatisierungssystem (1) durch das Kontroll-Programmobjekt (4) über eine Software-Schnittstelle des Automatisierungssystems (1);
- Weiterleiten der Eingabedaten vom Automatisierungssystem (1) an ein geeignetes Service-Programmobjekt (7) durch das Kontroll-Programmobjekt (4);
- Verarbeiten der Eingabedaten durch das Service-Programmobjekt (7);
- Zurücksenden von aus den Eingaben erzeugten Ausgabedaten an das Kontroll-Programmobjekt (4); und
- Weiterverwenden der Ausgabedaten.

10. Verfahren nach Anspruch 9, **dadurch gekennzeichnet, daß** das Weiterverwenden ein Anzeigen der Ausgabedaten durch ein Anzeige-Programmobjekt (8) beinhaltet.

11. Verfahren nach Anspruch 9 oder 10, **dadurch gekennzeichnet, daß** das Weiterverwenden ein Weitersenden der Ausgabedaten an das Automatisierungssystem (1) und ein Verwenden durch das Automatisierungssystem (1) beinhaltet.

12. Verfahren nach einem der Ansprüche 9 bis 11, **dadurch gekennzeichnet, daß** es vor dem Anfordern folgende Schritte aufweist:
- Erkennen einer von einem Anwender gewählten Funktion eines in einem Darstellungsprogramm ablaufenden Anzeige-Programmobjekts (8) des Kontroll-Programmobjekts (4); und
- Bestimmen eines zur Ausführung der gewählten Funktion geeigneten Service-Programmobjekts (7).

13. Verfahren nach einem der Ansprüche 9 bis 12, **dadurch gekennzeichnet, daß** es vor dem Anfordern folgende Schritte aufweist:
- Aufrufen einer bestimmten Funktion durch ein selbständig ablaufendes Programmobjekt; und
- Bestimmen eines zur Ausführung der gewählten Funktion geeigneten Service-Programmobjekts (7).

14. Verfahren nach einem der Ansprüche 9 bis 13, **dadurch gekennzeichnet, daß** es vor dem Anfordern folgende Schritte aufweist:
- Bestimmen der benötigten Eingabedaten durch Stellen einer Anfrage an das Service-Programmobjekt (7) und
- Übersenden einer Information über benötigte Eingabedaten vom Service-Programmobjekt (7) an das Kontroll-Programmobjekt (4).
